# EUROPÄISCHE PATENTSCHRIFT

(11) **EP 1 217 020 B1**
(45) Veröffentlichungstag und Bekanntmachung des Hinweises auf die Patenterteilung: **11.10.2006**
(21) Anmeldenummer: 01129415.4
(22) Anmeldetag: 10.12.2001
(51) Int. Cl.: C08G 18/48, C08G 18/73

(54) **Formmasse**
Moulding compound
Composé de moulage

(30) Priorität: 08.12.2000 DE 10061496
(43) Veröffentlichungstag der Anmeldung: 26.06.2002
(73) Patentinhaber: Köster, Hajo, Dr., 82131 Gauting (DE)
(72) Erfinder:
(74) Vertreter: Köster, Hajo

(56) Entgegenhaltungen:
- WO-A-86/02635
- NL-A- 7 315 990
- US-A- 4 547 561
- US-A- 5 130 404

## Beschreibung

Die Erfindung betrifft eine Formmasse auf der Basis von aliphatischen Polyisocyanaten, Polyole sowie ggf. Isocyanaten, Füllstoffen und Beschleunigern, welche sich besonders gut zur Verwendung als Konstruktions- und Plattenwerkstoff eignet und insbesondere unter den Gesichtspunkten der schnellen Verarbeitbarkeit und ihrer nahezu schrumpffreien Aushärtung zu hervorragenden Produkten führt.

Bekannt sind duroplastische Formmassen aus Polyurethanen mit lsocyanat-lsocyanurat-Komponenten, Epoxidharzen, Phenolharzen, Acrylharzen, ABS, Polycarbonat sowie gefülltem oder ungefülltem PMMA. Es gibt hierbei Massen, die nach ihrer Aushärtung durch sogenanntes Vakuumtiefziehen thermisch verformbar sind, wobei die Materialien im wesentlichen angewärmt werden, um so in einen elastomeren Zustand zu gelangen.

Massen, die zu Formteilen oder Platten vergossen werden, haben im wesentlichen einen duroplastischen Charakter und sind nach ihrer Aushärtung weitgehend formstabil und in den meisten Fällen nach einer thermischen Verformung jedoch nicht mehr einsetzbar.

Aus der NL-A-7315990 sind Formmassen bekannt, die aus einem verzweigten Polyether-Polyol auf Basis von Saccharose und einem cycloaliphatischen Diisocyanat (HMDI) erhalten wurden. Diese Formmassen können zur Herstellung von Kontaktlinsen eingesetzt werden.

Aus der US-A-4,547,561 ist eine Formmasse bekannt, die aus einem trifunktionellen Polyether-Polyol auf Basis Trimethylolpropan und Dicyclohexylmethan-4,4'-diisocyanat hergestellt wurden.

Auf dem Sektor der Polyurethane sind jedoch auch Formmassen bekannt, die in den Bereich der Elastomeren fallen, da sie einen Übergang zwischen Thermoplasten und Duroplasten darstellen. Sind diese Massen nach ihrer Aushärtung, z.B. als Plattenware, als diese Massen nach ihrer Aushärtung, z.B. als Plattenware, als Duroplaste eingestuft, lassen sie sich thermisch nicht mehr verformen. Diese Materialien, insbesondere Plexiglas, besitzen eine durch Kratzer oder mechanisches Abscheuern leicht verletzbare Oberfläche und weisen gegenüber den meisten Haushaltsreinigern, gängigen Lösungsmitteln oder beispielsweise Nagellackentferner auf der Basis von Aceton oder Essigsäurebutylestern keine Beständigkeit auf. Die gegenüber den vorgenannten chemischen Lösemitteln beständigen Massen sind meistens aber so spröde und hart, dass sie mit normalen Holzbearbeitungsmaschinen nicht ohne Beanstandung, d. h. wegen Ausreißens und Absplitterns, bearbeitet werden können. Sobald diese Massen in den elastomeren Sektor fallen, sind sie als formstabile Massen nicht einsetzbar, da sie nicht dimensionsstabil sind.

Für die Möbelindustrie werden verschiedene Formmassen als Plattenware unter verschiedenen Markenbezeichnungen angeboten, z.B. "Corian" der Firma Dupont, welches aus einem hochbefüllten PMMA besteht, oder Plexiglas, einem ungefüllten, zum Teil eingefärbten PMMA.

Es gibt aber auch Werkstoffe, die aus so genannten papierverleimten Schichtstoffen bestehen, welche als Harzgrundlage Formaldehyd- oder Phenolharze enthalten und mit Oberflächenkaschierungen aus PVC-Folie, Melaminharzen oder ähnlichen Stoffen versehen werden. Derartige Platten sind z.T. hoch temperaturbeständig, sehr hart und für alle denklichen Einsatzzwecke im Bereich von Plattenware einsetzbar.

Gegenüber der hier vorgestellten neuen Formmasse sind jedoch beide Vergleichsmaterialien nicht transparent oder eingefärbt transluzent herstellbar. Bei anderen transparenten oder transluzent einfärbbaren Massen, wie beispielsweise Polycarbonat oder Plexiglas, ist einerseits eine thermische Verformbarkeit nach Aushärtung oder andererseits die geforderte hohe Chemikalien- und Lösungsmittelfestigkeit nicht gegeben.

Die aus dem Stand der Technik bekannten Formulierungen und Systeme, die in zahlreichen Patentschriften bzw. Patentanmeldungen beschrieben werden, erfüllen jedoch nur einzelne der genannten Anforderungen oder Kombinationen von Teilbereichen dieser Anforderungen.

Der Erfindung liegt deshalb die Aufgabe zugrunde, eine Formmasse zu schaffen, mit der Formteile, Konstruktionsteile oder Plattenware hergestellt werden können, die schrumpffrei aushärtet, eine hohe Lichtbeständigkeit aufweist sowie mit den üblichen holzbearbeitenden Werkzeugen und Maschinen bearbeitet werden kann, wie z.B. bohren, sägen, schleifen, polieren und fräsen. Desweiteren sollte die Formmasse in einer hohe Transparenz oder einfärbbaren Transluzenz mit sogenannten Pastellfarbtönen herstellbar sein, die in sich selbst oder durch Zusatz von geeigneten Lichtschutzmitteln auch eine hohe UV-Beständigkeit aufweist.

Nach ihrer Aushärtung sollte die Masse z.B. als Plattenware noch thermisch verformbar sein, so dass aus ihr sphärisch geformte Teile ohne Rückverformung durch eingefrorene Spannungen hergestellt werden können, z. B. Verformung von Plattenware zu Lampenschirmen oder Spülbecken bzw. Waschtischen.

Zur Lösung dieser Aufgabe wird eine Formmasse der eingangs genannten Art vorgeschlagen, die folgende Komponenten aufweist:
10-90 Gew.-% einer Komponente A) mit einem OH-Gehalt von 10-26 Gew.-%, bei der es sich um
   A3) verzweigte Polyether-Polyole auf Basis Saccharose,
   A2) verzweigte Polyether-Polyole auf Basis von propoxiliertem Trimethylolpropan oder
   A1) trifunktionelle Polyether-Polyole auf Basis Trimethylolpropan oder um eine Mischung aus zwei oder drei dieser Komponenten A1) bis A3) handelt,
weniger als 90 Gew.-% einer Komponente B) bei der es sich um mindestens ein aliphatisches Polyisocyanat auf Basis HDI (Hexamethylendiisocyanat) mit einem NCO-Gehalt von 20-25 Gew.-% handelt,
weniger als 90 Gew.-% einer Komponente C) mit einem NCO-Gehalt von 4 - 36 Gew.-%, bei der es sich um
   C1) ein Prepolymer aus Polyol und Isophorondiisocyanat (IPDI),
   C2) ein Prepolymer aus Polyol und einem Allophanat-modifiziertem HDI-Trimerisat,
   C3) ein HDI-Isocyanato-isocyanurat oder
   C4) (Dicyclohexylmethan-diisocyanat oder um eine Mischung aus 2, 3 oder 4 der Komponenten C1) bis C4) handelt,
0 - 60 Gew.-% einer Komponente D), bei der es sich um einen der folgenden Bestandteile oder um eine Mischung aus zwei, drei, vier, fünf oder aller der folgenden Bestandteile handelt:
   0 - 100 und insbesondere 20 - 100 Gew.-% feinteiliger Kieselsäure,
   0 - 100und insbesondere 0 - 50 Gew.-% Zeolith und/oder gemahlenes Alkalisilikat,
   0 - 20 Gew.-% Additive
   0 - 100Gew.-% Füllstoffe,
   0 - 20 Gew.-% Farbmittel,
   0 - 20 Gew.-% UV-Lichtschutzmittel, und
0 - 5 Gew.-% einer Komponente E) im Form eines Beschleunigers, mit der Maßgabe, dass beide Komponente B) und C) vorhanden sind und zusammen mindestens 10 Gew.-% ausmachen und die Summe aus den Komponenten A) bis E) 100 Gew.-% beträgt.

Bevorzugt ist, dass die Komponente C1) einen NCO-Gehalt von 4 - 12 Gew.-% besitzt, die Komponente C2) einen NCO-Gehalt von 18 - 22 Gew.-% besitzt, die Komponente C3) einen NCO-Gehalt von 20 - 24 Gew.-% besitzt und die Komponente C4) einen NCO-Gehalt von 25 - 36 Gew.-% besitzt.

Die Komponenten B und C sind gemeinsam vorhanden sein und machen zusammen mindestens 10 Gew.-% aus.

Als Komponente A dienen verzweigte Polyole mit einem OH-Gehalt von 10-26 Gew.-%, d. h. bifunktionelle oder mehrfunktionelle Polyole mit funktionellen und nichtfunktionellen Seitengruppen bzw. -Ketten. Polyole mit elastifizierenden Eigenschaften, z. b. lineare Polyetherole oder Polyesterole, sind erfindungsgemäß weniger geeignet, weil sie die Festigkeit dieser Formmassen bei höheren Temperaturen stark sinken lassen. Erfindungsgemäß geeignete Polyole sind aus dem Stand der Technik in großem Umfang bekannt und in vielzähligen Variationen im Handel erhältlich, vergleiche z. B. DE-OS 3418877, Seite 7, Zeile 25, bis Seite 9, Zeile 26, DE-OS 2740504,Seite 11, Zeile 16, bis Seite 16, Zeile 27, sowie die einschlägige polyurethanbetreffende Literatur, wobei die erfindungsgemäß geeigneten verzweigten Polyole häufig im Zusammenhang mit der sog. Prepolymertechnik beschrieben werden. Hinsichtlich der Handelsprodukte, vgl. z. B. die verschiedenen Firmenschriften der Bayer AG zu der Produktreihe Desmophen®. Wegen der vollständigen oder zumindest weitgehenden Lösungsmittelfreiheit der erfindungsgemäßen Formmasse können allerdings nur solche Handelsprodukte Verwendung finden, die lösungsmittelfrei sind oder leicht von derartigen Bestandteilen befreit werden können.

Es können auch langkettige Polyether-Polyole mit einem Molekulargewicht von mehr als 3500 auf Basis Propylenglykol, Propylenoxid und/oder Ethylenoxid mit einem OH-Gehalt von 0,1 - 5 Gew.-% als Komponente A (d. h. Komponente A4)) für die erfindungsgemäße Formmasse eingesetzt werden. Sie macht dabei vorzugsweise 10 bis 25 Gew.-% aus.

Als besonders geeignet für die erfindungsgemäße Formmasse hat sich propoxyliertes Trimethylolpropan mit einem OH-Gehalt von ca. 11,5 Gew.-% erwiesen. Insbesondere bevorzugt sind Polyetherpolyole mittlerer Funktionalität auf der Basis Saccharose, die für die Herstellung von Polyurethan- (PUR) Hartschaumstoffen eingesetzt werden mit einem OH-Gehalt von ca. 13,5 Gew.-%. Härte und Dimensipnsstabilität erreicht man insbesondere durch ein trifunktionelles Polyetherpolyol auf Basis Trimethylolpropan mit einem OH-Gehalt von ca. 16,5 Gew.-%.

Die erfindungsgemäß eingesetzten Polyole einschließlich der bevorzugten Polyole sind alle im Handel erhältlich und können als Einzelkomponenten oder in Form von beliebigen Mischungen verwendet werden. Besonders bevorzugt ist allerdings die alleinige Verwendung von Polyetherpolyolen mittlerer Funktionalität auf der Basis Saccharose.

Als Komponente B dient ein aliphatisches Polyisocyanat auf Basis HDI mit einem NCO-Gehalt von 18-24 Gew.-%, vorzugsweise 20-22 Gew.-%. Üblicherweise liegt die Dichte bei etwa 1,1-1,2 g/cm³ und die Viskosität beträgt geeigneterweise etwa 1.000-3.000 mPa*s, wobei die Einhaltung einer geeigneten Viskosität (nicht nur dieser Komponente) selbstverständlich für die Verarbeitbarkeit von Bedeutung ist.

Hinsichtlich der Handelsprodukte, vgl. z.B. die verschiedenen Firmenschriften der Bayer AG zu der Produktreihe Desmodur®.

Als Komponente C können erfindungsgemäß auch Prepolymere eingesetzt werden, die durch Umsetzung von HDI-Varianten mit Polyol in bekannter Weise erhältlich sind. Für die Herstellung von Prepolymeren geeignete Polyole sind dem Fachmann bekannt und bedürfen deshalb keiner weiteren Erläuterung (Vergleiche z. B. DE-OS 2714006, Seite 10 ff.). Anstelle dieser HDI-Prepolymeren kann erfindungsgemäß auch das Isocyanurat des 1,6-Hexamethylendiisocyanats (HDI) und/oder Isophorondiisocyanat (IPDI) oder prepolymeres IPDI eingesetzt werden. Allophanat-modifizierte HDI-Trimerisate mit einem NCO-Gehalt von 18-22 Gew.-%, einzeln oder in Abmischungen, geeignet. In einer weiteren Ausführungsform können in der Komponente C neben den erwähnten HDI-Abkömmlingen auch Abmischungen mit Dicyclohexylmethandiisocyanat mit einem NCO-Gehalt von 25-36 Gew.-% eingesetzt werden. Wichtig für die Herstellung der Formmasse ist, dass sämtliche Isocyanate und auch andere Komponenten weitgehend lösungsmittelfrei sind. Vorzugsweise liegt die Komponente C in der erfindungsgemäßen Formmasse mit einer Menge von 10 - 30 Gew.-% vor, da dies zu optimalen Festigkeiten der ausgehärteten Formmasse führt.

Komponente D ist maßgeblich für die Transluzenz und Lagerstabilität sowie die Farbgebung ausschlaggebend. Durch Zusatz von Zeolithen und/oder gemahlenen Alkali-Silikaten, wie sie unter anderem im Handel als 50%ige Paste in Rhizinusöl angeboten werden, kommt eine besondere Bedeutung für die Schaum- und Porenfreiheit der Formmasse zu. Es ist besonders wichtig, dass das Material als feingemahlenes Pulver ohne Rhizinusöl eingesetzt wird, da Rhizinusöl keine ausreichende, langfristige UV-Stabilität garantiert, oder als Paste mit einem geeigneten Polyol der Komponente A eingesetzt wird.

Weitere geeignete Füllstoffe können zur Beeinflussung der Transparenz wie z.B. feinteilige Kieselsäure oder Mikrohohlglaskugeln sowie gefüllte Glaskugeln eingesetzt werden. Auch andere Füllstoffe wie Kreide, Sand oder Fasern sind geeignet, um Eigenschaften in Bezug auf Festigkeit und Transparenz zu verändern.

Als Farbmittel dienen alle herkömmlichen auf dem Markt erhältlichen Pigmente und Farbstoffe, um gewünschte Farbtöne zu erreichen. Insbesondere Einfluss auf die Transluzenz haben geringe Anteile an Pigmenten oder Farbstoffen, wobei vorzugsweise lichtechte Pigmente in geringen Konzentrationen von 0,01-0,5 % eingesetzt werden. Farbstoffe, die sich in Polyolen lösen, sind wegen ihrer geringeren Neigung zum Absetzen vorzuziehen. Um bestimmte ganz fein herauszustellende Farbtonnuancen zu erzielen, werden feinverteilte Pigmente aus sog. Masterbatches in Konzentrationen ≤ 0,01% eingesetzt.

Um eine Verbesserung des UV-Schutzes zu erreichen, können handelsübliche UV-Absorber eingesetzt werden. Siehe hierzu entsprechende Firmenschriften der Ciba Geigy AG, der Ciba Geigy Spezialitätenchemie sowie der Vantico AG.

Als Beschleuniger bzw. Katalysatoren können für die Komponente E alle hierfür bekannten Materialien wie Amine, Dibutylzinndilaurat, Zinnmercaptan, usw. verwendet werden (Vgl. z. B. DE-OS 2714006, Seite 20 u. 21 und DE-PS 2310559, Spalte 7), wobei tertiäre Amine bevorzugt sind. Insbesondere werden tert. Amine verwendet, die erfindungsgemäß im Nachhinein nicht zu einer Verschlechterung der UV-Lichtstabilität führen. Die Konzentration dieser Beschleuniger bzw. Katalysatoren beeinflusst im Wesentlichen den Vernetzungsgrad, die Dl- bzw. Trimerisierung, die Aushärtungszeiten und Aushärtungstemperaturen und nimmt somit Einfluss auf die Aushärtung bzw. die nachträgliche thermische Verformbarkeit. Als besonders geeignet für die erfindungsgemäße Formmasse hat sich ein doppelt bis dreifach so hoher Aminanteil, besonders bevorzugt als Diaza-bicyclooktan, gezeigt, wobei als Co-Katalysator in geringerem Anteil bevorzugt Dibutylzinndilaurat verwendet wird.

Insbesondere spielen die Anfangstemperaturen bei der Aushärtung der Formmassen eine bevorzugte Rolle. Formmassen, die bei der Aushärtung Temperaturen von 30-35°C nicht überschreiten, benötigen generell eine Aushärtungszeit von mindestens 12-16 Stunden. Wird die Temperatur von 20°C unterschritten, werden Aushärtezeiten von bis zu 48 h benötigt. Formmassen, die auf diese Art und Weise in Werkzeugen zu Platten vergossen werden, lassen sich durch Nachtempern von 24-48 h bei ca. 50-60°C im Anschluss danach noch bis zu 4 Wochen bei Temperaturen von 50-70°C zu beliebigen Teilen verformen. Auch kann eine entsprechende Nachhärtung Schrumpfungen in der Fläche beseitigen, wobei derartige Platten auf eine plane Fläche gelegt werden und dann beim Nachtempern bis zu 48 h glatte, sozusagen plane Oberflächen erhalten.

Insbesondere lassen sich die Aushärtungen durch vorgewärmtes Material bei Temperaturen von 25-45°C zeitlich steuern, wobei dem Fachmann bekannt ist, dass, je höher die Temperatur der Einzelkomponenten I und II, und je größer die Konzentration der Katalysatoren und Beschleuniger ist, die Aushärtungszeiten verringert werden. Dies heisst konkret, dass die sog. Verarbeitungszeit bei hohen Temperaturen der Einzelkomponenten und hohen Katalysatorenanteilen zu einer sehr schnellen Aushärtung führen. Die Temperaturen können auf herkömmlichem Weg durch Erhitzen mit geeigneten Wärmemedien, z. B. durch Rühren, oder Aufheizen mittels Thermostaten, oder beheizten Leitungen oder Gefäßen, erzielt, oder nach Zusammenbringen von Komponenten I und II durch sogennanten Strahlungsintensität, wie beispielsweise Mikrowelle und/oder IR-Strahlung, erhitzt und gehärtet werden. Insbesondere die Aushärtung bei höheren Temperaturen und entsprechend anteiligen Katalysatoren führt mit Mikrowellen- oder IR-Aushärtung zur sog. kontinuierlichen Plattenherstellung. Hierbei wird Material auf ein Endlos-Silikon-Band, oder ähnlich geeignete Materialien, gegossen, über entsprechende Kalandrierwalzen zur gewünschten Plattendicken gewalzt und im Anschluss danach über Mikrowelle gehärtet. Neben Mikrowellenhärtung sind auch Infrarotstrahlung und/oder andere hierfür geeignete und dem Fachmann geläufige Wärmeerzeuger geeignet.

Wenn im Rahmen der vorliegenden Unterlagen Bereichsangaben aufgeführt sind, dann umfassen diese Bereichsangaben alle zwischen den Bereichsgrenzen liegenden Einzelwerte und auch die Bereichsgrenzen als solche. So bedeutet beispielsweise die Angabe, wonach die Komponente A 10 - 90 Gew.-% ausmacht, dass zumindest alle ganzzahligen Einzelwerte und somit die Werte 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, 40, 41, 42, 43, 44, 45, 46, 47, 48, 49, 50, 51, 52, 53, 54, 55, 56, 57, 58, 59, 60, 61, 62, 63, 64, 65, 66, 67, 68, 69, 70, 71, 72, 72, 73, 74, 75, 76, 77, 78, 79, 80, 81, 82, 83, 84, 85, 86, 87, 88, 89 und 90 umfasst und offenbart sind.

Die Bereichsangabe 0 -100 % für Kieselsäure, Zeolith, Füllstoffe umfasst ebenfalls alle in diese Bereiche fallenden Einzelwerte und insbesondere die ganzzahligen Einzelwerte 0, 1, 2, 3, 4, 5, 6, 7, 8, 9, 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, 40, 41, 42, 43, 44, 45, 46, 47, 48, 49, 50, 51, 52, 53, 54, 55, 56, 57, 58, 59, 60, 61, 62, 63, 64, 65, 66, 67, 68, 69, 70, 71, 72, 72, 73, 74, 75, 76, 77, 78, 79, 80, 81, 82, 83, 84, 85, 86, 87, 88, 89, 90, 91, 92, 93, 94, 95, 96, 97, 98, 99 und 100. Die Bereichsangaben 0 bis 90 Gew.-% für die Komponenten B und C, die Bereichsangabe 0 - 60 für die Komponente D, die Bereichsangaben 0 - 20 Gew.-% für die Additive, Farbmittel und UV-Lichtschutzmittel und die Bereichsangabe 0 - 5 für die Komponente E umfassen alle Zwischenwerte und zumindest alle oben aufgezählten, in die jeweiligen Bereiche fallenden ganzzahligen Einzelwerte.

Für den NCO-Gehalt und den OH-Gehalt gilt entsprechendes. Die Bereichsangabe 4 - 36 Gew.-% für den NCO-Gehalt umfasst alle Zwischenwerte und insbesondere alle oben aufgezählten ganzzahligen Einzelwerte von 4 bis 36. Die Bereichsangabe 10 - 26 Gew.-% OH-Gehalt umfasst ebenfalls alle Zwischenwerte und insbesondere alle oben aufgezählten ganzzahligen Einzelwerte von 10 bis 26.

Ferner stehen alle Bereichsangaben (und somit jede einzelne Bereichsangabe) für alle in die jeweiligen Bereiche fallenden, engeren Bereiche. Mit anderen Worten, diese Bereichsangaben stehen für alle aus diesen Bereichen auswählbaren, engeren Bereiche.

Alle Prozentangaben im Rahmen der vorliegenden Unterlagen stellen im übrigen Gew.-%-Angaben dar, sofern nichts anderes angegeben ist.

### Beispiele

Im folgenden soll die Erfindung anhand von Beispielen näher erläutert werden. Sofern nichts anderes angegeben ist, sind die Mengen- und Prozentangeben in den folgenden Beispielen immer auf das Gewicht bezogen.

### Beispiel 1a:

Es wurde eine 2-Komponenten-Formmasse unter Verwendung folgender Komponenten hergestellt, wobei das Verhältnis Komponente I zu Komponente II in etwa 1:2 beträgt:
Komponente I: Bestehend aus 50% Komponente A eines Polyether-Polyols mittlerer Funktionalität auf der Basis Saccharose, mit einem OH-Gehalt von ca. 12 Gew.-%, sowie 50% eines trifunktionellen Polyether-Polyols auf Basis Trimethylolpropan mit einem OH-Gehalt von ca. 16,5 Gew.-%. 96% dieser Komponente A werden mit 4%, bestehend aus 0,5% pyrogener Kieselsäure, 2,0% Zeolit, 0,2% eines Verlaufsadditivs, z. B. Byk-361, 0,06% Dibutylzinndilaurat, 0,2% DABCO, sowie 1,04% Farbmittel, z. B. Sunfast Blue der Sun Chemie, gemischt.
Komponente II besteht gemäß Komponente B zu 50% aus einem aliphatischen Polyisocyanat auf Basis HDI mit einem NCO-Gehalt von ca. 23% und zu 50% aus einem ideal trimerisierten Isocyanurat des HDl's.

Die Aushärtung erfolgt in einer Plattenform bei 30°C innerhalb 20 h zu einem Plattenmaterial, welches 24 h bis 48 h bei 60°C nachgehärtet wird und formstabile Platten ergibt.

### Beispiel 1b:

Es wurde eine 2-Komponenten-Formmasse unter Verwendung folgender Komponenten hergestellt, wobei das Verhältnis Komponente I zu Komponente II in etwa 1 : 1,7 beträgt:
Komponente I: Bestehend aus 50% Komponente A eines Polyether-Polyols mittlerer Funktionalität auf der Basis Saccharose, mit einem OH-Gehalt von ca. 12 Gew.-%, sowie 50% eines langkettigen Polyether-Polyols auf Basis Propylenglykol, Propylenoxid und/oder Ethylenoxid mit einem OH-Gehalt von ca. 2,1 Gew.-%. 96% dieser Komponente A werden mit 4%, bestehend aus 0,5% pyrogener Kieselsäure, 2,0% Zeolit, 0,2% eines Verlaufsadditivs, z. B. Byk-361, 0,06% Dibutylzinndilaurat, 0,2% DABCO, sowie 1,04% Farbmittel, z. B. Sunfast Blue der Sun Chemie, gemischt.
Komponente II besteht gemäß Komponente B zu 60% aus einem aliphatischen Polyisocyanat auf Basis HDI mit einem NCO-Gehalt von ca. 23% und zu 40% aus Dicyclohexylmethandiisocyanat mit einem NCO-Gehalt von ca. 32 Gew.-%.

Die Aushärtung erfolgt in einer Plattenform bei 40°C innerhalb 4 h. Das erhaltene Material ist entformbar sowie nachverformbar. Nachdem das Material zu der gewünschten Form nachverformt ist, wird 4 h bei 90° nachgehärtet, wobei ein formstabiles Bauteil erhalten wird.

Im Folgenden wird über verschiedene 2-Komponenten-Formmassen berichtet, die aus Variationen verschiedener Rohstoffe bestehen. Komponente I besteht aus den Komponenten A, D und E. Komponente II beinhaltet Komponente B und C, gegebenenfalls auch D und E.

### Komponente A:

A1: trifunktionelles Polyetherpolyol auf Basis Trimethylolpropan mit einem OH-Gehalt von ca. 26%, Viskosität (25°C) ca. 600 mPa*s, Dichte (25°C) ca. 1,1 g/cm³.
A2: trifunktionelles Polyetherpolyol auf Basis Trimethylolpropan, OH-Gehalt ca. 17%, Viskosität (25°C) ca. 2000 mPa*s, Dichte (25°C) ca. 1,03 g/cm³.
A3: Polyetherpolyol mittlerer Funktionalität auf Basis Saccharose, OH-Gehalt ca. 13%, Viskosität (25°C) ca. 450 mPa*s, Dichte (25°C) ca. 1,07 g/cm³.

### Komponente B:

B1: Aliphatisches Polyisocyanat auf Basis Hexamethylendiisocyanat (HDI), NCO-Gehalt ca. 23,0%, Viskosität (25°C) ca. 3000 ± 500 mPa*s, Dichte (25°C) ca. 1,12 g/cm³.

### Komponente C:

C1: Isophorondiisocyanat-Prepolymeres, lösemittelfrei, NCO-Gehalt ca. 4%, Viskosität (25°C) ca. 9000 mPa*s, Dichte (25°C) ca. 1,15 g/cm³.
C2: Aliphatisches Polyisocyanat-Prepolymeres auf Basis HDI, NCO-Gehalt ca. 20%, Viskosität (5°C) ca. 300 mPa*s, Dichte (25°C) ca. 1,09 g/cm³.
C3: Isocyanurat des HDl, NCO-Gehalt ca. 22 Gew.-%, Viskosität (25°C) ca. 3000 ± 500 mPa*s, Dichte (25°C) ca. 1,2 g/cm³.
C4: Dicyclohexylmethan-diisocyanat NCO-Gehalt ca. 32%, Viskosität (25°C) ca. 30 mPa*s, Dichte (25°C) ca. 1,07 g/cm³.

### Komponente D:

D1: Zeolith-Pulver
D2: Pyrogene, feinverteilte Kieselsäure
D3: Farbpigmente, z. B. Titandioxid, Ultramarinblau EP, Irgalith Gelb, Bayferrox Braun, sowie sämtliche geeignete Farbmittel.

### Komponente E:

E1: Diaza-bicyclo-octan (DABCO) oder andere Tertiäramine
E2: Dibutylzinndilaurat
E3: Kaliumacetat

Die nachfolgenden Beispiele sollen die Erfindung näher erläutern, wobei die Mengen- und Prozentangaben immer auf das Gewicht bezogen sind.

Diese nachfolgenden Beispiele beziehen sich auf eine Kennzahl. Ist die Kennzahl 100 bedeutet dies, dass die Anteile von Komponenten A in Mischung mit Komponenten B und C bei Kennzahl 100 genau das chemische Äquivalent zwischen OH- und NCO-Gruppen darstellt. Ist die Kennzahl < 100 bedeutet dies, dass durch den geringeren Anteil an NCO-Gruppen eine Untervernetzung stattfindet, ist die Kennzahl > 100 bedeutet dies, dass übervernetzt wird, und damit die Anzahl an NCO-Gruppen > das Äquivalent eingesetzt wird.

Die angegebenen Komponenten werden homogen miteinander vermischt und in ein Formwerkzeug zur Herstellung von Plattenwaren gegossen. Hierbei ist darauf geachtet worden, dass die Mischung unter Vakuum blasenfrei vermischt wurde und alle Komponenten homogen eingemischt waren. Die gleiche homogene, blasenfreie Mischung erhält man bei Einsatz von 2-Komponenten-Mischanlagen, wenn die Einzelkomponenten I und II blasenfrei hergestellt wurden.

Reaktionsstarttemperatur: 40°C, beheizte Form, nach Zugabe der Formmasse wurde die Heizung entfernt, so dass sich RT nach kurzer Zeit einstellte.

### Beispiel 2:

Kennzahl 100; Topfzeit ca. 40 sek.;
50 GT A1; 50 GT A2; 2,5 GT E1; 0,2 GT E2; 1 GT D2; 0,2 GT D3; 0,4 GT D1; 50 GT B1; 50 GT C2; 90 GT C4.

### Beispiel 3:

Kennzahl 100; Aushärtungszeit ca. 40 sek.;
50 GT A1; 50 GT A3; 2,5 GT E1; 0,1 GT E2; 0,1 GT E3; 95 GT B1; 95 GT C4.

### Beispiel 4:

Kennzahl 100; Aushärtezeit ca. 2 min.;
100 GT A1; 2,5 GT E1; 0,2 GT E2; 75 GT B 1; 75 GT C2.

Das vorstehende Beispiel Nr. 2. wurden in einer auf 60°C temperierte Form (Plattenform) zu 12 mm starken Platten vergossen.

Die Eigenschaften der so hergestellten Formmassen-Platten wurden direkt nach der Entformung sowie einer Heißlagerung bei 60°C, 80°C, 90°C und 100°C nachgehärtet.

Die nachfolgende Tabelle stellt die erzielten Ergebnisse dar.

| **Beispiel** | **Ergebnis nach Entformung** | ***Nachhärtung ca. 12 h*** | | | |
|---|---|---|---|---|---|
| | | **Ergebnis nach Heißlagerung, 24-48 h** | | | |
| | | **60°C** | **80°C** | **90°C** | **100°C** |
| 2.) | Nach 40 sec: entformbar, | sehr hart, nicht verformbar | sehr hart, nicht verformbar | sehr hart, nicht verformbar | sehr hart, nicht verformbar |
| | sehr hart | | | | |
| 3.) | Nach ca. 40 sec: entformbar, | sehr hart, nicht verformbar | sehr hart, nicht verformbar | sehr hart, nicht verformbar | sehr hart, nicht verformbar |
| | sehr hart | | | | |
| 4.) | Hart bis mittel-zäh | sehr hart, nicht verformbar | sehr hart, nicht verformbar | hart, nicht verformbar | hart bis zäh-elastisch, nicht verformbar |

In der Auswertung der vorstehenden Beispiele konnte gezeigt werden, dass die erfindungsgemäßen Massen sich in ihrer Wärmeformbeständigkeit in Abhängigkeit von der Schichtdicke der Platten durch den Anteil der Katalysatoren (Komponente E) sowie die Reaktionstemperaturen in ihrer Härte und Wärmeformbeständigkeit beeinflussen lassen. Eine höhere Vernetzung und höhere Materialhärte wird ebenfalls gemäß Beispiel 2 und 3 durch höhere Vernetzung und Variation der Isocyanat-Mischung erreicht. Eine weitere höhere Vernetzung lässt sich auch gemäß Beispiel 3 durch höhere Vernetzung seitens der Polyole erreichen. Eine generell höhere Wärmeformbeständigkeit ist durch Erhöhung der Formtemperaturen gemäß Beispiel Nr. 2 erzielt worden.

Generell erhält man bei fast allen Formmassen eine hohe Wärmeformbeständigkeit von mindestens 70°C, wenn die Werkzeugtemperatur unterhalb der Reaktionstemperatur, insbesondere ca. 20-30°C, gehalten wird. Dies kann durch Gegenkühlen mit mediengekühlten Formen oder Abfuhr der entstehenden Wärme durch Luftventilation erreicht werden. Generell empfiehlt sich, derartige Platten-Formmassen unter Einsatz von 2-Komponenten-Maschinen, die mit statischen oder ähnlichen Mischern ausgerüstet sind, vorzunehmen. Dies gilt um so mehr für Versuche, bei denen mit höheren Temperaturen zu sehr harten, nicht mehr verformbaren Platten ausgehärtet werden soll. Insbesondere Materialien bzw. Mischungen mit kürzeren Reaktionszeiten können generell nur mit 2-Komponenten-Anlagen verarbeitet werden.

## Patentansprüche

1. Formmasse auf Basis von aliphatischen Polyisocyanaten, Polyolen, sowie gegebenenfalls Füllstoffen, Additiven, Farbmitteln und Beschleunigern,
**gekennzeichnet durch**
10 - 90 Gew.-% einer Komponente A) mit einem OH-Gehalt von 10-26 Gew.-%, bei der es sich um
A1) trifunktionelle Polyether-Polyole auf Basis Trimethylolpropan,
A2) verzweigte Polyether-Polyole auf Basis von propoxiliertem Trimethylolpropan oder
A3) verzweigte Polyether-Polyole auf Basis Saccharose oder
um eine Mischung aus zwei oder drei dieser Komponenten A1) bis A3) handelt,
weniger als 90 Gew.-% einer Komponente B) bei der es sich um mindestens ein aliphatisches Polyisocyanat auf Basis HDI (Hexamethylendiisocyanat) mit einem NCO-Gehalt von 20 - 25 Gew.-% handelt,
weniger als 90 Gew.-% einer Komponente C) mit einem NCO-Gehalt von 4 - 36 Gew.-%, bei der es sich um
C1) ein Prepolymer aus Polyol und Isophorondiisocyanat (IPDI),
C2) ein Prepolymer aus Polyol und einem Allophanat-modifiziertem HDI-Trimerisat,
C3) ein HDI-Isocyanato-isocyanurat oder
C4) Dicyclohexylmethan-diisocyanat oder um eine Mischung 2, 3 oder 4 der Komponenten C1) bis C4) handelt,
0 - 60 Gew.-% einer Komponente D), bei der es sich um einen der folgenden Bestandteile oder um eine Mischung aus zwei, drei, vier, fünf oder aller der folgenden Bestandteile handelt:
0 - 100 % feinteiliger Kieselsäure,
0 - 100 % Zeolith und/oder gemahlenes Alkalisilikat,
0 - 20 % Additive
0 - 100% Füllstoffe,
0 - 20% Farbmittel,
0 - 20% UV-Lichtschutzmittel, und
0 - 5 Gew.-% einer Komponente E) im Form eines Beschleunigers, mit der Maßgabe, dass beide Komponente B) und C) vorhanden sind und zusammen mindestens 10 Gew.-% ausmachen und die Summe aus den Komponenten A) bis E) 100 Gew.-% beträgt.

2. Formmasse nach Anspruch 1,
**dadurch gekennzeichnet ,**
**dass** die Komponente C1) einen NCO-Gehalt von 4 - 12 Gew.-% besitzt, die Komponente C2) einen NCO-Gehalt von 18 - 22 Gew.-% besitzt, die Komponente C3) einen NCO-Gehalt von 20 - 24 Gew.-% besitzt und die Komponente C4) einen NCO-Gehalt von 25 - 36 Gew.-% besitzt.

3. Formmasse auf Basis von aliphatischen Polyisocyanaten, Polyolen, sowie gegebenenfalls Füllstoffen, Additiven, Farbmitteln und Beschleunigern,
**gekennzeichnet durch**
10 - 90 Gew.-% einer Komponente A), bei der es sich um
A4) langkettige Polyether-Polyole mit einem Molekulargewicht von mehr als 3500 auf Basis Propylenglykol, Propylenoxid und/oder Ethylenoxid mit einem OH-Gehalt von 0,1 - 5 Gew.-% oder um eine Mischung aus der Komponente A4) mit einer, zwei oder drei der Komponenten A1) bis A3) gemäß Anspruch 1 oder 2 handelt
weniger als 90 Gew.-% einer Komponente B) gemäß Anspruch 1,
weniger als 90 Gew.-% einer Komponente C) gemäß Anspruch 1
0 - 60 Gew.-% einer Komponente D), gemäß Anspruch 1 und
0 - 5 Gew.-% einer Komponente E) gemäß Anspruch 1, mit der Maßgabe, dass beide Komponente B) und C) vorhanden sind und zusammen mindestens 10 Gew.-% ausmachen und die Summe aus den Komponenten A) bis E) 100 Gew.-% beträgt.

4. Formmasse nach einem der vorhergehenden Ansprüche,
**dadurch gekennzeichnet ,**
**dass** sie als 2-Komponenten-Formmasse aus einer Komponente I und einer Komponente II vorliegt, wobei die Komponente I die Komponente A) und die Komponente II die Komponente B) und die Komponente C) enthält.

5. Formmasse nach Anspruch 4,
**dadurchgekennzeichnet**,
**dass** die Komponenten D) und E) jeweils für sich genommen sowohl insgesamt in der Komponente I als auch insgesamt in der Komponente II enthalten sind oder auf die Komponenten I und II aufgeteilt sind

6. Formmasse nach Anspruch 4 oder 5,
**dadurch gekennzeichnet ,**
**dass** das auf das Gewicht bezogene Mischungsverhältnis der Komponenten I und II im Bereich von 3:1 bis 1:10 liegt.

7. Formmasse nach einem der Ansprüche 1 bis 6,
**dadurchgekennzeichnet**,
**dass** die Komponente A entweder
A1) trifunktionelles Polyetherpolyol auf Basis Trimethylolpropan mit einem OH-Gehalt von 16,7 Gew.-%,
A2) verzweigtes Polyether-Polyol auf Basis von propoxiliertem Trimethylolpropan mit einem OH-Gehalt von 11,5 Gew.-%, oder
A3) verzweigtes Polyether-Polyol mittlerer Funktionalität auf der Basis Saccharose mit einem OH-Gehalt von 13,5 Gew.-% enthält oder daraus besteht,
oder
eine beliebige Mischung aus A1), A2) und/oder A3) enthält oder aus einer derartigen Mischung besteht.

8. Formmasse nach einem der Ansprüche 1 bis 7,
**dadurch gekennzeichnet ,**
**dass** der Füllstoff der Komponente D) aus feinteiliger Kieselsäure, Zeolith und/oder gemahlenem Alkalisilikat, Siliciumdioxid, Microhohlglaskugel aus Glas oder Phenolharz, oder anderen Füllstoffen wie Aluminiumoxid oder Tonen bzw. Kreiden sowie allen üblichen Pigmenten und gegebenenfalls UV-Lichtschutzmitteln besteht.

9. Verwendung der Formmasse gemäß einem der Ansprüche 1 bis 8 als Konstruktionswerkstoff zur Herstellung von Plattenwaren in beliebiger Dicke.

10. Verwendung nach Anspruch 9,
**dadurch gekennzeichnet ,**
**dass** aus der Formmasse hergestellte Platten thermisch nachverformt und durch Stempel oder Vakuumtiefziehen zu beliebigen Formteilen geformt werden.

11. Verwendung nach Anspruch 9 oder 10,
**dadurch gekennzeichnet ,**
**dass** die Formmasse zur Herstellung von Formteilen, Plattenelementen für den Bau von Möbeln oder Verkleidungsplatten für den Außenbereich sowie zur Herstellung von Türen, Tischplatten, Spülbecken und allen geeigneten Gegenständen im Bad oder im oder außerhalb des Hausbereichs sowie für den Bau von Teilen für Land-, Luft- und Wasserfahrzeugen eingesetzt wird.

12. Formteil erhalten aus einer Formmasse nach einem der Ansprüche 1 bis 8.

13. Formteil nach Anspruch 12,
**dadurch gekennzeichnet ,**
**dass** es sich bei dem Formteil um ein plattenförmiges Vorprodukt oder um ein insbesondere plattenförmiges Endprodukt handelt.

## Claims

1. Moulding compound on the basis of aliphatic polyisocyanates, polyols and eventually fillers, additives, colouring agents and accelerators,
**characterized by**
10 to 90 wt.-% of a component A) having an OH-content of 10 to 26 wt.-% composed of
A1) trifunctional polyether-polyols on the basis of trimethylolpropane,
A2) branched polyether-polyols on the basis of propoxylated trimethylolpropane or
A3) branched polyether-polyols on the basis of saccharose or a mixture of two or three of these components A1) to A3),
less than 90 wt.-% of a component B) composed of at least one aliphatic polyisocyanate on the basis HDI (hexamethylendiisocyanate) having an NCO-content of 20 to 25 wt.-%,
less than 90 wt.-% of a component C) having an NCO-content of 4 to 36 wt.-% being
C1) a prepolymer out of polyol and isophorondiisocyanate (IPDI)
C2) a prepolymer out of polyol and an HDI-trimerisate modified by allophanate,
C3) an HDI-isocyanato-isocyanurate or
C4) dicyclohexylmethane-diisocyanate or
a mixture of 2, 3 or 4 of these components C1) to C4),
0 to 60 wt.-% of a component D) composed of one of the following components or of a mixture out of two, three, four, five or all of the following components:
0 to 100 % finely divided silicic acid,
0 to 100 % zeolite and/or ground alkali silicate
0 to 20 % additives,
0 to 100 % fillers,
0 to 20 % colouring agents,
0 to 20 % UV-light-stability agents, and
0 to 5 wt.-% of a component E) in the form of an accelerator, with the proviso that both components B) and C) are present and account for at least 10 wt.-% and the sum of the components A) to E) is 100 wt.-%.

2. Moulding compound according to claim 1,
**characterized in that**
the component C1) has an NCO-content of 4 to 12 wt.-%, the component C2) has an NCO-content of 18 to 22 wt.-%, the component C3) has an NCO-content of 20 to 24 wt.-%, and the component C4) has an NCO-content of 25 to 36 wt.-%.

3. Moulding compound on the basis of aliphatic polyisocyanates, polyols as well as eventually fillers, additives, colouring agents and
accelerators,
**characterized by**
10 to 90 wt.-% of a component A) composed of A4) long-chain polyether-polyols having a molecular weight of more than 3500 on the basis of propyleneglycol, propyleneoxide and/or ethyleneoxide having an OH-content of 0.1 to 5 wt.-% or of a mixture of the component A4) with one, two or three of the components A1) to A3) according to claim 1 or 2,
less than 90 wt.-% of a component B) according to claim 1,
less than 90 wt.-% of a component C) according to claim 1,
0 to 60 wt.-% of a component D) according to claim 1, and
0 to 5 wt.-% of a component E) according to claim 1,
with the proviso that both components B) and C) are present and account together for at least 10 wt.-% and the sum of the components A) to E) is 100 wt.-%.

4. Moulding compound according to one of the preceding claims,
**characterized in that**
it is present as 2-components-moulding compound out of component I and a component II whereby the component I contains the component
A) and the component II contains the component B) and the component C).

5. Moulding compound according to claim 4,
**characterized in that**
the components D) and E) each are present completely in the component I or completely in the component II or are allotted to the components I and II.

6. Moulding compound according to claim 4 or 5,
**characterized in that**
the mixing ratio based on the weight of the components I and II is in the range of 3:1 to 1:10.

7. Moulding compound according to one of the claims 1 to 6,
**characterized in that**
the component A) contains or consists of either
A1) trifunctional polyetherpolyol on the basis of trimethylolpropane having an OH-content of 16,7 wt.-%,
A2) branched polyether-polyol on the basis of propoxylated trimethylolpropane having an OH-content of 11,5 wt.-%, or
A3) branched polyether-polyol of medium functionality on the basis of saccharose having an OH-content of 13,5 wt.-%,
or
contains or consists of any mixture out of A1), A2), and/or A3).

8. Moulding compound according to one of the compounds 1 to 7,
**characterized in that** the filler of the component D) consists of finely divided silicic acid, zeolite and/or ground alkali silicate, silicium dioxide, hollow glass beads out of glass or phenolic resin, or other filler agents such as aluminium oxide or clays or chalks as well as all common pigments and eventually UV-stability agents.

9. Use of a moulding compound according to one of the claims 1 to 8 as material of construction for producing sheets of any desired thickness.

10. Use according to claim 9,
**characterized in that**
the sheets prepared out of the moulding compound are thermally postformed and are formed by moulding plugs or by vacuum forming to give moulded articles of any kind.

11. Use according to claim 9 or 10,
**characterized in that**
the moulding compound serves for the production of formed pieces, plate/sheet elements for constructing furniture or covering plates/sheets for the outdoor area as well as for producing doors, desktops, sinks and all articles suitable for the bathroom and within or outside of the home area as well as for the construction of parts for land, air and water vehicles.

12. Formed piece obtained out of moulding compound according to one of the claims 1 to 8.

13. Formed piece according to claim 12,
**characterized in that** the formed piece is a plate-like/sheet-like preliminary product or in particular a plate-like/sheet-like final product.

## Revendications

1. Matière à mouler basée sur des polyisocyanates aliphatiques, des polyols, ainsi qu'éventuellement sur des matériaux de remplissage, des additifs, des colorants et des accélérateurs,
**caractérisée par**
10 à 90 % en poids d'un composant A) avec une teneur en OH de 10 à 26 % en poids, pour lequel il s'agit de
A1) polyéther polyol trifonctionnel sur la base de triméthylolepropane,
A2) polyéther polyol ramifié sur la base de triméthylolepropane propoxylé ou
A3) polyéther polyol ramifié sur la base de saccharose
ou
d'un mélange de deux ou trois de ces composants A1) à A3),
moins de 90 % en poids d'un composant B) pour lequel il s'agit d'au moins un polyisocyanate aliphatique sur HDI de base (diisocyanate d'hexaméthylène) avec une teneur en NCO de 20 à 25 % en poids,
moins de 90 % en poids d'un composant C) avec une teneur en NCO de 4 à 36 % en poids, pour lequel il s'agit de
C1) un prépolymère de polyol et de diisocyanate d'isophorone(IPDI),
C2) un prépolymère de polyol et d'un trimère HDI modifié allophanate,
C3) un HDI - isocyanate - isocyanurate ou
C4) un dicyclohexylméthane - diisocyanate ou
d'un mélange de 2, 3 ou 4 des composants C1) à C4),
0 à 60 % en poids d'un composant D) pour lequel il s'agit de l'un des composants suivants ou d'un mélange de deux, trois, quatre, cinq ou de tous les composants suivants :
0 à 100 % d'acide silique en particules fines,
0 à 100 % de zéolithe et/ou de silicate alcalin moulu,
0 à 20 % d'additifs
0 à 100 % de matériaux de remplissage,
0 à 20 % de colorants,
0 à 20 % de produit protecteur contre la lumière UV et
0 à 5 % en poids d'un composant E) sous la forme d'un accélérateur, dans la mesure où les deux composants B) et C) sont présents et représentent ensemble au moins 10 % en poids et où la somme des composants A) à E) correspond à 100 % en poids.

2. Matière à mouler selon la revendication 1,
**caractérisée en ce que**
le composant C1) possède une teneur en NCO de 4 à 12 % en poids, le composant C2) une teneur en NCO de 18 à 22 % en poids, le composant C3) une teneur en NCO de 20 à 24 % en poids et le composant C4) une teneur en NCO de 25 à 36 % en poids.

3. Matière à mouler basée sur des polyisocyanates aliphatiques, des polyols, ainsi qu'éventuellement sur des matériaux de remplissage, des additifs, des colorants et des accélérateurs,
**caractérisée par**
10 à 90 % en poids d'un composant A) pour lequel il s'agit de
A4) un polyéther polyol à chaîne longue d'un poids moléculaire supérieur à 3500 sur la base de propylène glycol, d'oxyde de propylène et/ou d'oxyde d'éthylène avec une teneur en OH de 0,1 à 5 % en poids ou d'un mélange du composant A4) avec un, deux ou trois des composants A1) à A3) selon la revendication 1 ou 2,
moins de 90 % en poids d'un composant B) selon la revendication 1, moins de 90 % en poids d'un composant C) selon la revendication 1, 0 à 60 % en poids d'un composant D) selon la revendication 1, 0 à 5 % en poids d'un composant E) selon la revendication 1, dans la mesure où les deux composants B) et C) sont présents et représentent ensemble au moins 10 % en poids et où la somme des composants A) à E) correspond à 100 % en poids.

4. Matière à mouler selon l'une quelconque des revendications précédentes,
**caractérisée en ce que**
elle se présente en tant que matière à mouler à 2 composants d'un composant I et d'un composant II, le composant I contenant le composant A) et le composant II, le composant B) et le composant C).

5. Matière à mouler selon la revendication 4,
**caractérisée en ce que**
les composants D) et E), pris individuellement chacun, sont tant contenus globalement dans le composant I que globalement dans le composant II ou répartis entre les composants I et II.

6. Matière à mouler selon la revendication 4 ou 5,
**caractérisée en ce que**
la proportion du mélange des composants I et II, rapportée au poids, figure dans la plage des 3 : 1 à 1 : 10.

7. Matière à mouler selon l'une quelconque des revendications 1 à 6,
**caractérisée en ce que**
le composant A contient ou se constitue de
A1) polyéther polyol trifonctionnel sur la base de triméthylolepropane avec une teneur en OH de 16,7 % en poids,
A2) polyéther polyol ramifié sur la base de triméthylolepropane propoxylé avec une teneur en OH de 11,5 % en poids, ou
A3) polyéther polyol ramifié de fonctionnalité moyenne sur saccharose de base avec une teneur en OH de 13,5 % en poids
ou
contient un mélange quelconque de A1), A2) et/ou A3) ou se constitue d'un tel mélange.

8. Matière à mouler selon l'une quelconque des revendications 1 à 7,
**caractérisée en ce que**
le matériau de remplissage du composant D) se constitue d'acide silique en particules fines, de zéolithe et/ou de silicate alcalin moulu, de dioxyde de silicium, de microbilles creuses en verre ou en résine phénolique ou d'autres matériaux de remplissage tels l'oxyde d'aluminium, ou d'argiles
ou de craies ainsi que les pigments usuels et, éventuellement, de produits protecteurs contre la lumière UV.

9. Application de la matière à mouler selon l'une quelconque des
revendications 1 à 8 en tant que matériau de construction pour fabriquer des produits en plaques d'épaisseur quelconque.

10. Application selon la revendication 9,
**caractérisée en ce que**
des plaques fabriquées avec la matière à mouler sont ensuite mises en forme thermiquement puis transformées en pièces de forme quelconque par matriçage ou matriçage sous vide.

11. Application selon la revendication 9 ou 10,
**caractérisée en ce que**
la matière à mouler est employée pour la fabrication de pièces moulées, d'éléments en plaque pour la réalisation de meubles ou de plaques d'habillage pour l'extérieur ainsi que pour la fabrication de portes, de plateaux de table, d'éviers et tous les objets adaptés de la salle de bain, soit dans l'habitat soit à l'extérieur, ainsi que pour la construction de pièces pour véhicules terrestres, aériens ou flottants.

12. Pièce moulée obtenue à partir d'une matière à mouler selon l'une
quelconque des revendications 1 à 8.

13. Pièce moulée selon la revendication 12,
**caractérisée en ce que**
dans le cas de la pièce moulée, il s'agit d'un produit primaire en plaques
ou d'un produit final, en particulier en plaques.
